# EUROPEAN PATENT APPLICATION

(11) **EP 2 050 339 A1**
(43) Date of publication of application: **22.04.2009**
(21) Application number: 08166938.4
(22) Date of filing: 17.10.2008
(51) Int. Cl.: A22C 7/00

(54) **Removable hopper device**

(30) Priority: 18.10.2007 IT BO20070700
(71) Applicant: LA MINERVA DI CHIODINI MARIO S.R.L., 40138 Bologna (IT)
(72) Inventor: Salati Chiodini, Daniele, 40138, Bologna (IT)
(74) Representative: Negrini, Elena

(57) **Abstract**

A removable hopper device including at least a side wall (2), for containing material, equipped with connecting means (3) for the removable connection to a connecting plate (P) of a machine to be fed with material.

The side wall (2) is also equipped with an intake (4) for introducing the material and said device 1 is furthermore provided with an opening (5) for the passage of the material into the machine.

The device (1) includes a bottom wall (7) blocked to the side wall (2), opposite to the intake (4), and provided with an opening (5).

## Description

The present invention concerns the working equipment for food and similar materials and refers to a removable hopper device particularly suitable for feeding machines for the manufacture of humid materials, in particular for shaping hamburgers.

There are known hopper devices having a removable cylindrical wall, for example with bayonet connections, blockable onto an upper plate of a shaping machine.

A disadvantage of these well-known devices consists in that, while the cylindrical wall hopper can be removed and washed mechanically, the upper plate integrated with the machine, must be manually cleaned spending a large amount of time and with risks to damage the machine.

Other disadvantage consists in that the bayonet connections are subjected to wear and can compromise the tightness between the hopper and the plate.

An object of this invention is to propose a hopper device fit to preserve the machine from soiling. Another object is to propose a hopper device and a connecting plate for fixing it to the respective machine under wear test.

The characteristics of this invention are as follows with particular reference to the attached drawings in which:
- figure 1 shows an axonometric view of the removable hopper device object of the present invention in a condition of partial connection to a fixing plate of a machine;
- Figure 2 shows a top view of the device of figure 1;
- figures 3 and 4 show device views of figure 1 from two different sides;
- figure 5 shows a sectional view according to plan V - V of the device of figure 1 of figure 4.

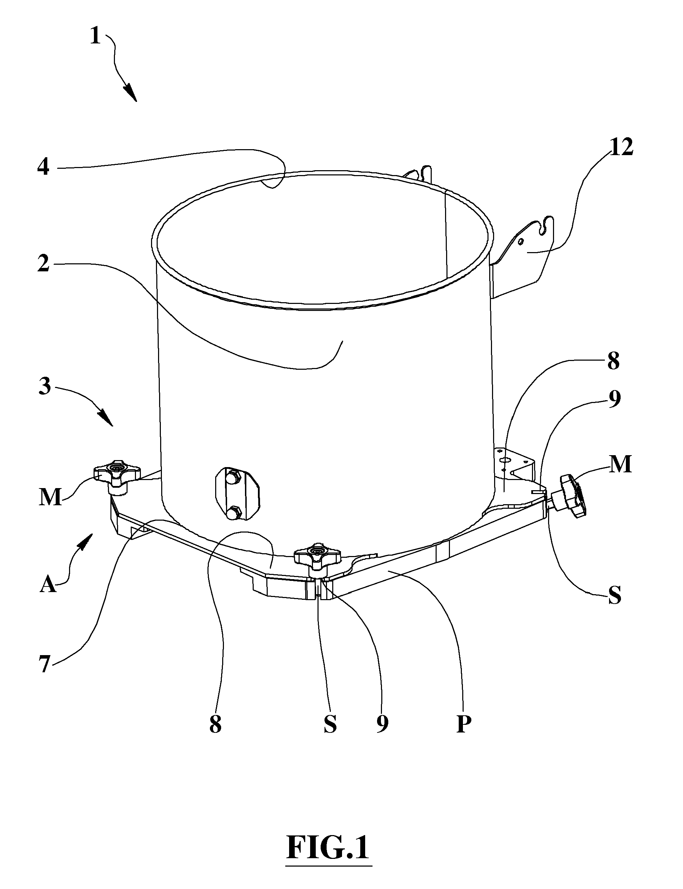

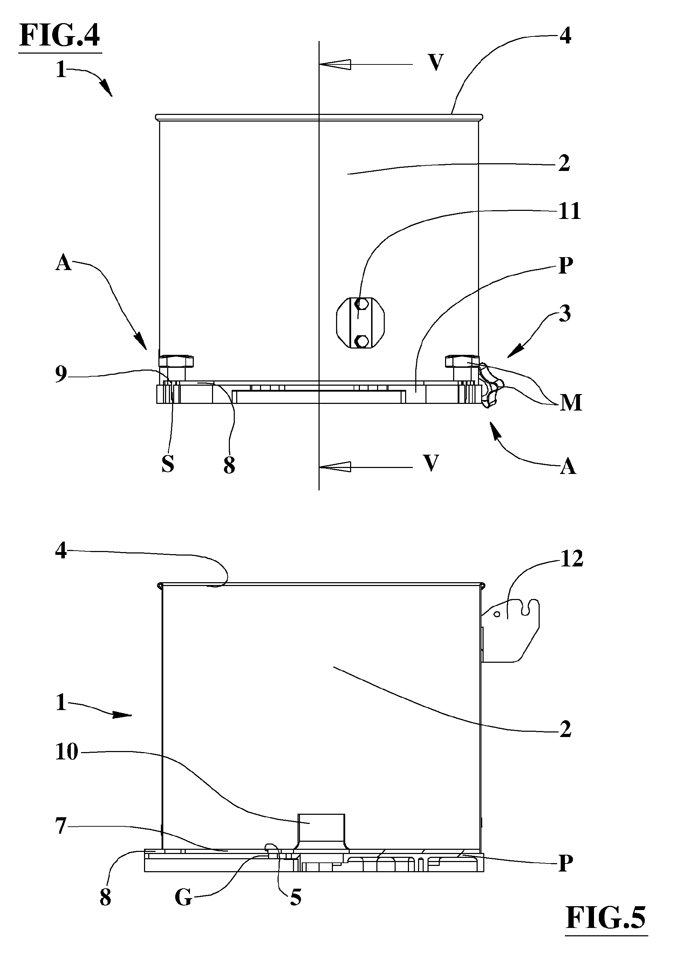

With reference to figures 1-5, numeral 1 indicates the removable hopper device, object of the present invention, fixable, by means of its connection tools 3, to a connecting plate P of a machine to be fed with a material, for example minced meat or another foodstuff. The hopper device 1 is designed to receive and to contain the material by which the machine is fed, for example a hamburger shaping machine.

The hopper device 1 includes a side-wall 2 cylindrically shaped, made starting from a sheet or stainless steel plate or other suitable material suitable for the working type to which is destined the same device and the respective machine.

The top edge of the side-wall 2 defines an intake 4 for introducing the material into the device 1 and the lower edge of said side-wall 2 is fixed, for example by welding, to a bottom wall 7 almost flat and carried out by shaping, for example by means of cutting or laser cut, a stainless steel flat plate or other suitable material.

In the bottom wall 7 is furthermore carried out an opening 5 for the passage of the material to be worked from the device 1 to the machine.

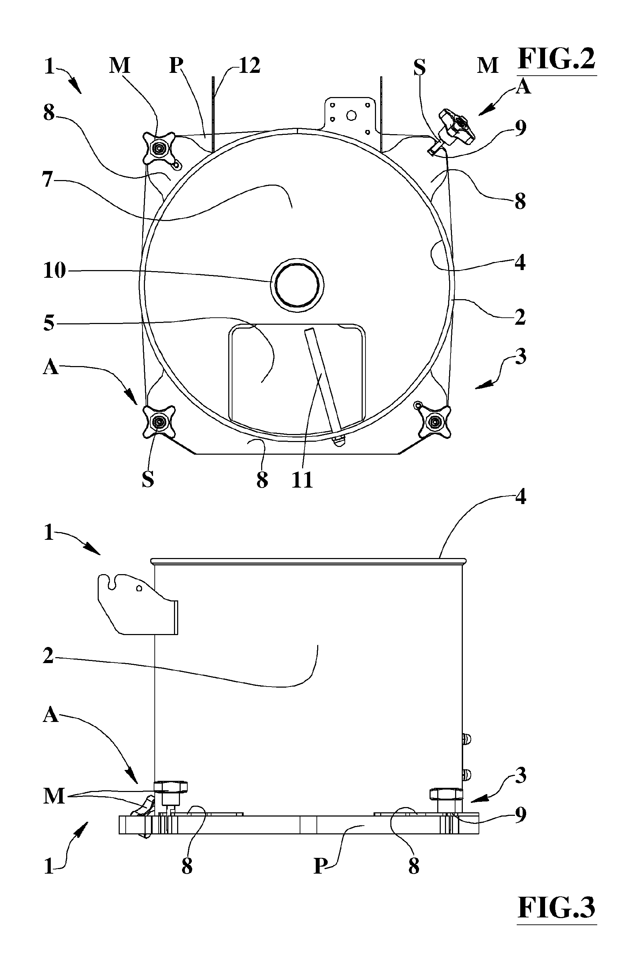

The bottom wall 7 is shaped for having a plurality of extensions 8 protruding externally to the side-wall 2. Each of these extensions has at least a seat 9 for the removable connection to a corresponding connector A to the connecting plate P. In figures 1 and 2 three external extensions of the bottom wall are illustrated. The front extension has two seats 9 while each of the two posterior extensions has a respective single seat 9.

Each seat 9 includes a shelf, made by the corresponding protruding portion of the bottom wall, with an open slot, for example having an elongated rectangular shape and radially directed with respect to the longitudinal axis of the cylindrical side-wall. Each open slot is engaged by a threaded rod S of the connector A having an articulated end to the connecting plate P and the other end having a hand-grip with nut screw M for clamping the rod to the shelf.

The bottom wall 7 is centrally equipped with a tubular bushing 10 cylindrically shaped, for example applied to the plate, or preferably obtained by deforming the plate of the bottom wall. The bushing 10 protrudes inwardly the device 1 and is fit for the passage of a rotation shaft of operative means, for example with pusher propeller of the material toward the bottom and towards the opening 5, with kneading machine, with agitator or for differently acting onto the material.

The opening edge 5 of the bottom wall 7 is insertable into the perimeter of a passage G, for the material, obtained in the connecting plate P and underlying such opening in the fixing condition of device 1 to such plate P.

The opening 5 of the bottom wall 7 has an approximately quadrilateral shape with a side next to side-wall 2 or defined by this latter.

The device 1 also includes a matching arm 11 fixed to the side-wall 2, protruding inwardly from this latter and faced to opening 5 of the bottom wall 7.

The side-wall 2 has outside support means 12 for a cover and moving handles, of known type and not illustrated.

A possible operation of device 1 provides that, starting from a connecting condition in which each seat 9 is engaged with a corresponding connector A and in which the opening 5 is faced to the G passage of the connecting plate P, the minced meat is mixed and pushed towards the opening by the propeller operative means. At the end of operations, the device 1 is easily removed unscrewing the handles with nut screw M and can be placed into a washing machine while the connecting plate P and the machine remain almost cleaned. The bottom wall makes superfluous the adoption of security seals between the side-wall and the machine used in the well-known devices. This assures the tightness independently from wearing.

An advantage of this invention is to supply a hopper device fit to preserve the respective machine from fouling.

Other advantage is to supply a hopper device and a respective connecting plate blocked to the respective machine for fixing, under wear test, said device to such machine.

## Claims

1. Removable hopper device including at least a side-wall (2), containing the material, equipped with connecting means (3) for the removable connection to a connecting plate (P) of a machine to be fed with material and equipped with an intake (4) for feeding material; said device is furthermore provided with an opening (5) for the passage of material to the machine and is **characterised by** having a bottom wall (7) blocked to the side-wall (2) at position opposite to the intake (4) and provided with the opening (5).

2. Device according to claim 1 **characterised in that** the bottom wall (7) and the side-wall (2) are made of metal and are reciprocally welded.

3. Device according to claim 1 or 2 **characterised in that** the bottom wall (7) mainly consists of a shaped plate.

4. Device according to any of the previous claims **characterised in that** the bottom wall (7) has a plurality of extensions (8) protruding externally from the side-wall (2), each having at least a seat (9) for the removable connection to a corresponding connector (A) of the connecting plate (P).

5. Device according to claim 4 **characterised in that** each seat (9) includes a shelf with an open slot engaged with a threaded rod (S) of the connector (A) having an end articulated to the connecting plate (P) and the other end having an handle with nut screw (M) for clamping the rod to the shelf.

6. Device according to any of the previous claims **characterised in that** the bottom wall (7) is centrally equipped with a bush (10) protruding inwardly the device (1) and fit for passing a rotation shaft of operative means acting onto material contained in the side wall (2).

7. Device according to any of the previous claims **characterised in that** the opening (5) of the bottom wall (7) is insertable in the perimeter of a passage (G), for the material, obtained in the connecting plate (P) and underlying to such opening in the fixing condition of the device (1) to such plate (P).

8. Device according to any of the previous claims **characterised in that** the opening (5) of the bottom wall (7) has an approximately quadrilateral shape with a side close to or defined by the side wall (2).

9. Device according to any of the previous claims **characterised in that** it has a matching arm mean (11) fixed to the side wall (2) and protruding inwardly this latter.

10. Device according to claim 9 **characterised in that** the matching arm mean (11) is faced to the opening (5) of the bottom wall (7).

11. Device according to any of the previous claims **characterised in that** the side-wall (2) has a cylindrical shape.

12. Device according to any of the previous claims **characterised in that** the side wall (2) has outwardly support means (12) for a cover and movement handles.
